# EUROPÄISCHE PATENTSCHRIFT

(11) **EP 3 993 472 B1**
(45) Veröffentlichungstag und Bekanntmachung des Hinweises auf die Patenterteilung: **09.04.2025**
(21) Anmeldenummer: 21203451.6
(22) Anmeldetag: 19.10.2021
(51) Int. Cl.: H04W 12/63, H04W 12/126, H01M 10/42, H01M 50/247, H01M 50/576

(54) **NUTZUNGSBESCHRÄNKUNG EINES ELEKTROGERÄTS**
USE LIMITATION OF AN ELECTRICAL DEVICE
RESTRICTION D'UTILISATION D'UN APPAREIL ÉLECTRIQUE

(30) Priorität: 02.11.2020 DE 102020128734
(43) Veröffentlichungstag der Anmeldung: 04.05.2022
(73) Patentinhaber: Einhell Germany AG, 94405 Landau / Isar (DE)
(72) Erfinder: Dr. THANNHUBER, Markus, 94405 Landau (DE)
(74) Vertreter: Hofstetter, Schurack & Partner

(56) Entgegenhaltungen:
- WO-A1-95/35228
- CN-A- 111 261 827
- DE-U1- 202007 001 737

## Beschreibung

Die vorliegende Erfindung betrifft ein Verfahren zur Nutzungsbeschränkung eines Elektrogeräts, eine Nutzungsbeschränkungsvorrichtung für ein Elektrogerät, ein Akkupack für ein Elektrogerät, ein Elektrogerät sowie ein System zur Nutzungsbeschränkung für ein Elektrogerät.

Elektrogeräte, beispielsweise Elektrowerkzeuge, insbesondere tragbare und/oder akkubetriebene Elektrogeräte, sind häufig Gegenstand von Diebstahl. Die ständige Überwachung des Elektrogeräts durch einen Benutzer ist jedoch mitunter nicht durchführbar, beispielsweise beim Einsatz von mehreren Elektrogeräten auf einer Baustelle oder dergleichen. Es ist daher erstrebenswert, den Diebstahl von Elektrogeräten weniger attraktiv zu machen.

Darüber hinaus birgt die Verwendung von Elektrogeräten, insbesondere Elektrowerkzeugen, durch Kinder oder unqualifizierte Personen gegebenenfalls Gefahren.

Nach WO 95/35228 A1 ist ein elektrisch gesteuertes Schaltgerät für Autobatterien bekannt. Das Schaltgerät enthält zwei Anschlussklemmen und mindestens einen Halbleiterschalter. Ein Transmitter sendet Informationen, die einen Identitätscode enthalten, wenn eine Taste des Transmitters gedrückt wird. Ein Prozessor vergleicht die empfangenen Identitätsinformationen mit gespeicherten Identitätsinformationen. Stimmen diese überein wird ein erhöhter Entladestrom der Batterie zugelassen.

Nach CN 111 261 827 A ist ein Verfahren und ein Gerät zur Diebstahlsicherung einer Batterie bekannt. Dabei werden Ein- und Ausgangsströme der Batterie überwacht. Übersteigen diese einen Schwellwert, wird ein Signal empfangen und analysiert. Ergibt diese Analyse, dass es sich um einen unzulässigen Benutzer handelt, wird der Strom begrenzt.

Vor diesem Hintergrund ist es eine Aufgabe der vorliegenden Erfindung, ein verbessertes Konzept zur Nutzung eines Elektrogeräts anzugeben, durch das die Nutzung des Elektrogeräts automatisch beschränkt werden kann.

Diese Aufgabe wird gelöst durch den jeweiligen Gegenstand der unabhängigen Ansprüche. Vorteilhafte Weiterbildungen und bevorzugte Ausführungsformen sind Gegenstand der abhängigen Ansprüche.

Das verbesserte Konzept beruht auf der Idee, mittels eines externen Sendegeräts unidirektional und verbindungslos ein Funksignal, insbesondere ein Rundfunksignal oder Broadcastsignal, in die Umgebung des externen Sendegeräts auszusenden und den Betrieb des Elektrogeräts abhängig vom Empfang des Funksignals durch das Elektrogerät freizuschalten oder zu sperren.

Gemäß dem verbesserten Konzept wird ein Verfahren zur Nutzungsbeschränkung eines Elektrogeräts angegeben. Dabei wird mittels eines externen Sendegeräts ein Funksignal verbindungslos gesendet. Mittels einer Steuereinheit des Elektrogeräts wird überprüft, ob das Funksignal von dem Elektrogerät empfangen wurde, insbesondere mittels einer Kommunikationsschnittstelle des Elektrogeräts empfangen wurde, welche mit der Steuereinheit gekoppelt ist. Mittels der Steuereinheit wird abhängig von einem Ergebnis der Überprüfung ein Betrieb des Elektrogeräts freigeschaltet oder gesperrt.

Bei dem Elektrogerät kann es sich um ein Elektrowerkzeug oder ein sonstiges, vorzugsweise tragbares, Elektrogerät handeln. Das Elektrogerät kann zur kabelgebundenen Versorgung mit elektrischem Strom ausgestaltet sein oder zur Versorgung durch wenigstens ein Akkupack, wobei das wenigstens eine Akkupack als Teil des Elektrogeräts angesehen werden kann. **In** solchen Ausführungsformen kann das wenigstens eine Akkupack, beispielsweise ein Batteriemanagementsystem des wenigstens einen Akkupacks, die Steuereinheit beinhalten. Auch die Kommunikationsschnittstelle kann von dem wenigstens einen Akkupack beinhaltet sein. Es sind jedoch auch andere Ausgestaltungsformen denkbar, bei denen die Steuereinheit und/oder die Kommunikationsschnittstelle nicht Teil des wenigstens einen Akkupacks sind.

Das externe Sendegerät kann als extern in dem Sinne angesehen werden, als dass es nicht Teil des Elektrogeräts ist. Das externe Sendegerät und das Elektrogerät sind insbesondere räumlich voneinander getrennt.

Das externe Sendegerät kann dabei insbesondere ein herkömmliches Kommunikationsmittel enthalten, um das Funksignal gemäß einer marktgängigen Technologie zu erzeugen und zu senden.

Das externe Sendegerät kann beispielsweise als ein elektronisches Gerät, insbesondere ein mobiles elektronisches Endgerät, wie beispielsweise ein Mobiltelefon, ein Smartphone, ein Tabletcomputer, ein Laptopcomputer, eine Smartwatch, ein sonstiges sogenanntes Wearable oder dergleichen sein. Alternativ kann das externe Sendegerät als stationäres Sendegerät ausgestaltet sein.

Unter dem Freischalten oder Sperren des Betriebs des Elektrogeräts kann beispielsweise verstanden werden, dass keinerlei Benutzung des Elektrogeräts, die eine elektronische Funktion des Elektrogeräts erfordert, möglich ist, wenn der Betrieb gesperrt ist und bei freigeschaltetem Betrieb eine bestimmungsgemäße Verwendung des Elektrogeräts uneingeschränkt möglich ist. Alternativ kann das Freischalten beziehungsweise Sperren des Betriebs einen definierten Betriebsmodus oder bestimmte definierte Funktionen des Elektrogeräts betreffen, sodass dieser Betriebsmodus oder diese Funktionen bei freigeschaltetem Betrieb zur Verfügung stehen, bei gesperrtem Betrieb jedoch nicht.

Indem der Betrieb des Elektrogeräts abhängig von dem Ergebnis der Überprüfung, ob das Funksignal von dem Elektrogerät empfangen wurde oder nicht, durchgeführt wird, kann sichergestellt werden, dass der Betrieb beziehungsweise die Nutzung des Elektrogeräts insoweit eingeschränkt ist, dass sich das Elektrogerät in einer vordefinierten Umgebung des Sendegeräts befinden muss, damit der Betrieb freigeschaltet werden kann. Dementsprechend wird die Nutzung räumlich auf einen entsprechenden Sendebereich des Sendegeräts beschränkt. Zusätzlich kann auch die Identität des Sendegeräts geprüft werden, um abhängig davon den Betrieb freizuschalten, sodass es nicht notwendigerweise ausreichend ist, dass sich das Elektrogerät in einem Sendebereich eines beliebigen Sendegeräts befindet, sondern dass es vielmehr erforderlich ist, dass sich das Elektrogerät in dem Sendebereich eines bestimmten externen Sendegeräts befindet. So kann eine detailliert abgestimmte Nutzungsbeschränkung implementiert werden.

Durch das Verfahren kann dementsprechend ein Diebstahlschutz implementiert werden, indem der Betrieb des Elektrogeräts gesperrt wird, wenn anhand der Überprüfung festgestellt wird, dass das Funksignal von dem Elektrogerät nicht empfangen wurde. Dadurch wird der Diebstahl an sich zwar nicht verhindert, jedoch unattraktiver gemacht. In analoger Weise kann eine Kindersicherung oder dergleichen implementiert werden, indem der Betrieb des Elektrogeräts beispielsweise nur dann freigeschaltet wird, wenn sich das Elektrogerät in einer definierten Umgebung eines mobilen Endgeräts eines autorisierten Benutzers befindet.

Durch die Verwendung eines Funksignals, das ohne Aufbau einer zweiseitigen Verbindung, also insbesondere verbindungslos, gesendet wird, ist eine flexible Anpassung des Verfahrens auf verschiedenste Sendegeräte und Elektrogeräte einfach möglich, da die Implementierung eines komplexen Übertragungsprotokolls nicht erforderlich ist. Zudem können auf Seiten des Elektrogeräts Kosten und Bauraum eingespart werden, da die Kommunikationsschnittstelle lediglich einen Empfang des Funksignals sicherstellen muss, jedoch nicht ihrerseits Informationen oder Signale an das Sendegerät aussenden muss, der Informationsaustausch also unidirektional erfolgt. Dadurch kann außerdem Energie eingespart werden.

In manchen Ausführungsformen kann das Freischalten derart verstanden werden, dass es auch das freigeschaltet lassen des Betriebs beinhaltet und das Sperren kann derart verstanden werden, dass es auch das gesperrt lassen des Betriebs beinhaltet.

Abhängig von dem empfangenen Funksignal wird eine räumliche Entfernung des Elektrogeräts von dem Sendegerät bestimmt mittels der Steuereinheit, wenn gemäß dem Ergebnis der Überprüfung das Funksignal von dem Elektrogerät empfangen wurde. Der Betrieb des Elektrogeräts wird mittels der Steuereinheit abhängig von der Entfernung freigeschaltet oder gesperrt.

Insbesondere kann das Freischalten nur dann erfolgen, wenn die Entfernung kleiner oder gleich einer vorgegebenen Maximalentfernung ist beziehungsweise das Sperren kann dann erfolgen, wenn die Entfernung größer ist als die Maximalentfernung. Die Entfernung kann dabei abhängig von einer empfangenen Feldstärke und/oder einer empfangenen Signalamplitude des empfangenen Funksignals bestimmt werden. Dazu kann ein gängiges Schätzverfahren eingesetzt werden.

Dadurch kann die Zuverlässigkeit des Verfahrens weiter erhöht werden beziehungsweise unnötiges Sperren oder Freischalten des Betriebs vermieden werden.

Gemäß zumindest einer Ausführungsform des Verfahrens wird der Betrieb des Elektrogeräts nur dann freigeschaltet, wenn gemäß dem Ergebnis der Überprüfung das Funksignal von dem Elektrogerät empfangen wurde.

Mit anderen Worten ist das Empfangen des Funksignals durch das Elektrogerät eine notwendige Bedingung zum Freischalten des Betriebs. In manchen Ausführungsformen ist das Empfangen des Funksignals notwendig und hinreichend für das Freischalten des Betriebs. In anderen Ausführungsformen ist das Empfangen des Funksignals nicht hinreichend, sodass weitere Bedingungen erfüllt sein müssen, um das Freischalten auszulösen. Solche Bedingungen können beispielsweise die Identität des Sendegeräts oder die Entfernung des Sendegeräts von dem Elektrogerät betreffen.

Gemäß zumindest einer Ausführungsform wird der Betrieb des Elektrogeräts gesperrt, wenn, beispielsweise genau dann wenn, gemäß dem Ergebnis der Überprüfung das Funksignal nicht von dem Elektrogerät empfangen wurde.

Mit anderen Worten ist das Nichtempfangen des Funksignals durch das Elektrogerät eine hinreichende und gegebenenfalls auch notwendige Bedingung für das Sperren.

Gemäß zumindest einer Ausführungsform wird der Betrieb mittels der Steuereinheit abhängig von dem Ergebnis der Überprüfung entweder freigeschaltet oder gesperrt.

Gemäß zumindest einer Ausführungsform wird das Funksignal mittels des externen Sendegeräts mit einer vorgegebenen Wiederholungsfrequenz wiederholt verbindungslos gesendet.

Dies kann insbesondere derart verstanden werden, dass mit der vorgegebenen Wiederholungsfrequenz stets dasselbe Signal erzeugt und ausgesendet wird.

Dadurch kann eine höhere Zuverlässigkeit des Verfahrens erreicht werden, indem ein längerer Zeitraum überwacht wird, um zu überprüfen, ob das Funksignal empfangen wurde. So kann verhindert werden, dass kurzfristige Empfangsstörungen oder Sendestörungen zu unbeabsichtigtem Freischalten oder Sperren des Betriebs führen.

Gemäß zumindest einer Ausführungsform wird zum Überprüfen, ob das Funksignal von dem Elektrogerät empfangen wurde, überprüft, insbesondere mittels der Steuereinheit, ob das Funksignal während eines Zeitraums, der größer oder gleich einer durch die Wiederholungsfrequenz definierten Periodendauer ist, wenigstens einmal von dem Elektrogerät empfangen wurde.

Die Periodendauer ist dabei gegeben durch die inverse Wiederholungsfrequenz, sodass während des Zeitraums mindestens einmal der Empfang des Funksignals möglich beziehungsweise zu erwarten ist.

Gemäß zumindest einer Ausführungsform wird der Betrieb des Elektrogeräts gesperrt, wenn, beispielsweise genau dann wenn, gemäß dem Ergebnis der Überprüfung festgestellt wird, dass das Funksignal während des Zeitraums nicht wenigstens N mal von dem Elektrogerät empfangen wurde, wobei N einer Ganzzahl größer oder gleich 1 entspricht.

Insbesondere bei der Implementierung als Diebstahlsperre bieten sich solche Ausführungsformen an, um die Sperrung, die gegebenenfalls nicht ohne Weiteres aufgehoben werden kann, nur einzuleiten, wenn mit ausreichender Wahrscheinlichkeit von einem Diebstahl oder einem unbefugten Benutzen des Elektrogeräts ausgegangen werden kann.

Die Steuereinheit kann also insbesondere zyklisch prüfen, ob das Funksignal empfangen wurde, wobei die Wiederholungsfrequenz der Prüfung beliebig sein kann, beispielsweise einmal täglich, mehrmals täglich oder auch mehrmals pro Stunde und so weiter. Die Wiederholungsfrequenz der Prüfung ist dabei nicht notwendigerweise gleich der Wiederholungsfrequenz zum Senden des Funksignals. Beispielsweise kann die Wiederholungsfrequenz der Prüfung kleiner sein als die Wiederholungsfrequenz zum Senden.

Während das Funksignal beispielsweise im Abstand von einigen Minuten oder Sekunden wiederholt gesendet werden kann, kann die Steuereinheit die Prüfung nur einmal täglich oder wenige Male täglich durchführen. Die Wiederholungsfrequenz der Prüfung kann aber auch ähnlich oder gleich der Wiederholungsfrequenz zum Senden sein.

Ferner ist es denkbar, dass Tageszeiten definiert sind, zu denen das Funksignal einmal oder mehrmals gesendet wird und die Steuereinheit den Empfang entsprechend überprüft.

Gemäß zumindest einer Ausführungsform wird abhängig von einer Betätigung eines Bedienelements des Elektrogeräts, insbesondere durch einen Benutzer des Elektrogeräts, ein Betätigungssignal erzeugt, beispielsweise mittels des Bedienelements oder einer Komponente des Elektrogeräts, die mit dem Bedienelement gekoppelt ist. Die Überprüfung, ob das Funksignal von dem Elektrogerät empfangen wurde, wird abhängig von dem Betätigungssignal durchgeführt oder der Betrieb des Elektrogeräts wird abhängig von dem Betätigungssignal freigeschaltet oder gesperrt.

Beispielsweise kann die Überprüfung nur dann durchgeführt werden, wenn das Betätigungssignal die Betätigung des Bedienelements anzeigt beziehungsweise das Freischalten oder Sperren kann nur in diesem Fall erfolgen.

Dadurch kann zum einen Energie eingespart werden. Zum anderen wird dadurch erreicht, dass das Freischalten beziehungsweise Sperren des Betriebs nur bei Bedarf erfolgt. So ist es beispielsweise möglich, dass sich das Elektrogerät nicht in der Umgebung des Sendegeräts, insbesondere nicht im Sendebereich des Sendegeräts, befindet, ohne dass dies notwendigerweise einer unbefugten Benutzung gleichkommt. Beispielsweise kann das Elektrogerät an einem Ort gelagert werden beziehungsweise zu einem Ort transportiert werden, der nicht dem vorgesehenen Benutzungsort entspricht. Ist dies der Fall, so wird typischerweise das Bedienelement nicht betätigt, sodass auch keine Sperrung beziehungsweise Freischaltung des Betriebs erforderlich ist.

Beispielsweise kann die Steuereinheit den Betrieb nur dann freischalten, beispielsweise genau dann, wenn das Betätigungssignal auf die Betätigung des Bedienelements hinweist beziehungsweise die Betätigung des Bedienelements anzeigt und gemäß der Überprüfung das Funksignal von dem Elektrogerät empfangen wurde.

Beispielsweise kann die Steuereinheit den Betrieb nicht freischalten und/oder den Betrieb sperren, wenn das Betätigungssignal die Betätigung des Bedienelements anzeigt, gemäß der Überprüfung jedoch das Funksignal von dem Elektrogerät nicht empfangen wurde.

Gemäß zumindest einer Ausführungsform wird mittels der Kommunikationsschnittstelle oder mittels einer weiteren Kommunikationsschnittstelle des Elektrogeräts, insbesondere angesteuert durch die Steuereinheit, ein Informationssignal erzeugt und an das externe Sendegerät oder das weitere mobile elektronische Endgerät übermittelt, wenn das Betätigungssignal die Betätigung des Bedienelements anzeigt und gemäß der Überprüfung das Funksignal nicht von dem Elektrogerät empfangen wurde.

Die Erzeugung und Übermittlung des Informationssignals kann auf einer anderen Technologie basieren, als die Erzeugung und Übermittlung des Funksignals.

Auf diese Weise kann der Eigentümer oder rechtmäßige Benutzer von einem potentiell unbefugten Zugriff auf das Elektrogerät informiert werden.

Gemäß zumindest einer Ausführungsform wird der Betrieb des Elektrogeräts abhängig von dem Ergebnis der Überprüfung gesperrt, indem abhängig von dem Ergebnis der Überprüfung mittels der Steuereinheit eine Stromversorgung des Elektrogeräts deaktiviert wird.

Insbesondere wird bei akkubetriebenen Elektrogeräten der Akku beziehungsweise das Akkupack oder eine Stromabgabe durch das Akkupack deaktiviert. Dies kann beispielsweise durch Öffnen eines oder mehrerer Schaltelemente des Elektrogeräts und/oder des Akkupacks erfolgen. Dadurch kann insbesondere auch eine unbefugte Benutzung des Akkupacks mit einem anderen Elektrogerät verhindert werden.

Gemäß zumindest einer Ausführungsform beinhaltet das Funksignal eine Identitätsinformation betreffend das Sendegerät. Wenn gemäß dem Ergebnis der Überprüfung das Funksignal von dem Elektrogerät empfangen wurde, wird der Betrieb des Elektrogeräts abhängig von der Identitätsinformation freigeschaltet oder gesperrt.

Dadurch kann das Elektrogerät einem oder mehreren bestimmten Sendegeräten zugeordnet werden. So kann beispielsweise nur dann, wenn von einem zugeordneten Sendegerät das Funksignal empfangen wurde, der Betrieb des Elektrogeräts freigeschaltet werden.

Gemäß zumindest einer Ausführungsform wird das Funksignal als WPAN-Funksignal (Englisch: "Wireless Personal Area Network") erzeugt und gesendet, beispielsweise als Bluetooth-Signal oder Bluetooth-Low-Energy-Signal. WPAN-Funksignale und insbesondere Bluetooth-Signale eignen sich aufgrund ihrer passenden Reichweite und der Möglichkeit, verbindungslos Informationen zu übertragen besonders für die Verwendung gemäß dem verbesserten Konzept.

Gemäß zumindest einer Ausführungsform wird mittels der Steuereinheit, wenn gemäß dem Ergebnis der Überprüfung das Funksignal nicht von dem Elektrogerät empfangen wurde, eine Zeitdauer bestimmt, die seit dem einen früheren Empfang des Funksignals durch das Elektrogerät vergangen ist. Abhängig von der Zeitdauer wird das Informationssignal von dem Elektrogerät an das externe Sendegerät oder das weitere elektronische Endgerät gesendet.

Dadurch kann ein Eigentümer oder rechtmäßiger Benutzer darüber informiert werden, wie lange sich das Elektrogerät bereits nicht mehr in dem Sendebereich des externen Sendegeräts befindet, sodass die Situation besser interpretiert werden kann.

Gemäß dem verbesserten Konzept wird eine Nutzungsbeschränkungsvorrichtung für ein Elektrogerät angegeben. Die Nutzungsbeschränkungsvorrichtung weist eine Kommunikationsschnittstelle auf, die dazu eingerichtet ist, ein Funksignal von einem externen Sendegerät verbindungslos zu empfangen. Die Nutzungsbeschränkungsvorrichtung weist eine Steuereinheit auf, die dazu eingerichtet ist, zu überprüfen, ob das Funksignal mittels der Kommunikationsschnittstelle empfangen wurde und abhängig von einem Ergebnis der Überprüfung ein Freischaltsignal zum Freischalten eines Betriebs des Elektrogeräts oder ein Sperrsignal zum Sperren des Betriebs des Elektrogeräts zu erzeugen.

Weitere Ausführungsformen der Nutzungsbeschränkungsvorrichtung gemäß dem verbesserten Konzept folgen direkt aus den verschiedenen Ausgestaltungsformen des Verfahrens zur Nutzungsbeschränkung nach dem verbesserten Konzept und umgekehrt. Insbesondere ist eine Nutzungsbeschränkungsvorrichtung nach dem verbesserten Konzept dazu eingerichtet, ein Verfahren nach dem verbesserten Konzept durchzuführen oder führt ein solches Verfahren durch.

Gemäß dem verbesserten Konzept wird ein Akkupack für ein Elektrogerät angegeben, das eine Nutzungsbeschränkungsvorrichtung gemäß dem verbesserten Konzept beinhaltet.

Gemäß dem verbesserten Konzept wird auch ein Elektrogerät, beispielsweise ein Elektrowerkzeug, angegeben, das eine Nutzungsbeschränkungsvorrichtung und/oder ein Akkupack nach dem verbesserten Konzept enthält.

Gemäß dem verbesserten Konzept wird ein System zur Nutzungsbeschränkung für ein Elektrogerät angegeben, wobei das System ein externes Sendegerät beinhaltet, das dazu eingerichtet ist, ein Funksignal verbindungslos in seine Umgebung zu senden. Das System weist außerdem eine Nutzungsbeschränkungsvorrichtung, ein Akkupack und/oder ein Elektrogerät nach dem verbesserten Konzept auf.

Gemäß zumindest einer Ausführungsform des Systems zur Nutzungsbeschränkung ist das externe Sendegerät als stationärer Sender ausgestaltet oder das externe Sendegerät ist als mobiles elektronisches Endgerät ausgestaltet.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind auch Ausführungen und Merkmalskombinationen als offenbart anzusehen, die nicht alle Merkmale eines ursprünglich formulierten unabhängigen Anspruchs aufweisen und/oder die über die in den Rückbezügen der Ansprüche dargelegten Merkmalskombinationen hinausgehen oder von denen abweichen.

In den Figuren zeigen:
- Fig. 1: eine schematische Darstellung einer beispielhaften Ausführungsform eines Systems zur Nutzungsbeschränkung für ein Elektrogerät nach dem verbesserten Konzept; und
- Fig. 2: eine schematische Darstellung einer weiteren beispielhaften Ausführungsform eines Systems zur Nutzungsbeschränkung nach dem verbesserten Konzept.

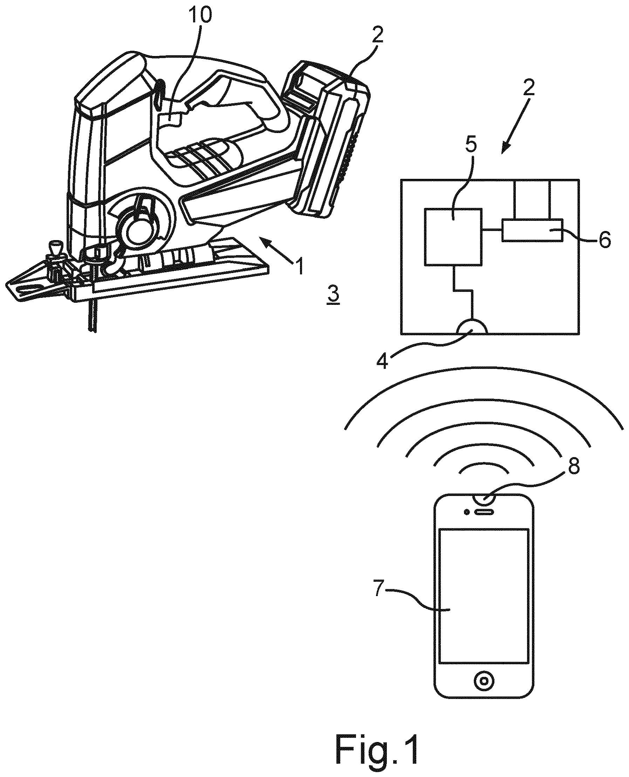

In Fig. 1 ist schematisch eine beispielhafte Ausführungsform eines Systems zur Nutzungsbeschränkung für ein Elektrogerät 1 nach dem verbesserten Konzept dargestellt. Das System weist eine Nutzungsbeschränkungsvorrichtung 3 nach dem verbesserten Konzept auf, sowie ein externes Sendegerät 7, das im Beispiel der Fig. 1 als mobiles elektronisches Endgerät, beispielsweise als Smartphone, ausgestaltet ist.

Das Elektrogerät 1 weist beispielsweise ein Akkupack 2 auf, wobei das Akkupack 2 die Nutzungsbeschränkungsvorrichtung 3 beinhalten kann. In alternativen Ausführungsformen ist die Nutzungsbeschränkungsvorrichtung 3 jedoch nicht von dem Akkupack 2, sondern von einer anderen Komponente des Elektrogeräts 1 umfasst. Das Elektrogerät 1 ist dann nicht notwendigerweise akkubetrieben. Das Elektrogerät 1 ist rein beispielhaft als Elektrowerkzeug dargestellt, insbesondere als Stichsäge. Art und Verwendungszweck des Elektrogeräts 1 sind jedoch für das verbesserte Konzept nicht von einschränkender Bedeutung.

Das Sendegerät 7 weist eine Sendeeinheit 8, beispielsweise einen Bluetoothsender, auf, mittels der das Sendegerät 7 in regelmäßigen Abständen ein Funksignal verbindungslos, beispielsweise als Broadcastsignal oder Rundfunksignal, in die Umgebung des Sendegeräts 7 aussenden kann. Die Nutzungsbeschränkungsvorrichtung 3 weist eine Kommunikationsschnittstelle 4 auf, insbesondere einen Funkempfänger oder Bluetooth-Empfänger, sowie eine Steuereinheit 5, die mit der Kommunikationsschnitt-stelle 4 verbunden ist.

Befindet sich die Nutzungsbeschränkungsvorrichtung 3, insbesondere das Elektrogerät 1, in einem Sendebereich des Sendegeräts 7, so kann das Elektrogerät 1 das Funksignal mittels der Kommunikationsschnittstelle 4 empfangen, ohne dass dazu eine Verbindung, insbesondere eine bidirektionale Verbindung, aufgebaut werden muss. Die Steuereinheit 5 kann überprüfen, ob das Funksignal mittels der Kommunikationsschnittstelle 4 empfangen wurde und abhängig davon den Betrieb des Elektrogeräts 1 freischalten oder sperren.

Dazu kann die Steuereinheit 5 beispielsweise die Stromabgabe von einer oder mehreren Akkuzellen 6 des Akkupacks 2 an das Elektrogerät 1 unterbinden. Bei nichtakkubetriebenen Elektrogeräten 1 kann eine entsprechende Unterbrechung der Stromversorgung des Elektrogeräts 1 erfolgen.

**In** anderen Ausgestaltungsformen ist auch eine elektronische oder mechanische Sperre des Elektrogeräts, beispielsweise eines Motors des Elektrogeräts, denkbar, um den Betrieb des Elektrogeräts 1 zu sperren.

**In** verschiedenen Ausgestaltungsformen kann die Steuereinheit 5 regelmäßig überprüfen, ob das Funksignal empfangen wurde. **In** alternativen Ausführungsformen überprüft die Steuereinheit 5 den Empfang des Funksignals nur, wenn ein Bedienelement 10 des Elektrogeräts 1 durch einen Benutzer betätigt wird. Dabei ist die Betätigung des Bedienelements 10 für den Betrieb des Elektrogeräts 1 erforderlich.

Die Steuereinheit 5 kann den Betrieb des Elektrogeräts freischalten beziehungsweise die Stromversorgung aktivieren, wenn die Steuereinheit 5 feststellt, dass das Funksignal empfangen wurde, insbesondere nur dann. So lässt sich beispielsweise das unbefugte Benutzen des Elektrogeräts verhindern. Somit wird effektiv ein Diebstahlschutz implementiert, da das Elektrogerät nicht betrieben werden kann, wenn es sich außerhalb des Sendebereichs des Sendegeräts 7 befindet.

Zudem oder alternativ kann auch eine Kindersicherung implementiert werden, sodass die Benutzung des Elektrogeräts 1 beispielsweise nur möglich ist, wenn sich ein autorisierter Benutzer mit dem Sendegerät 7 in der Umgebung des Elektrogeräts 1 befindet.

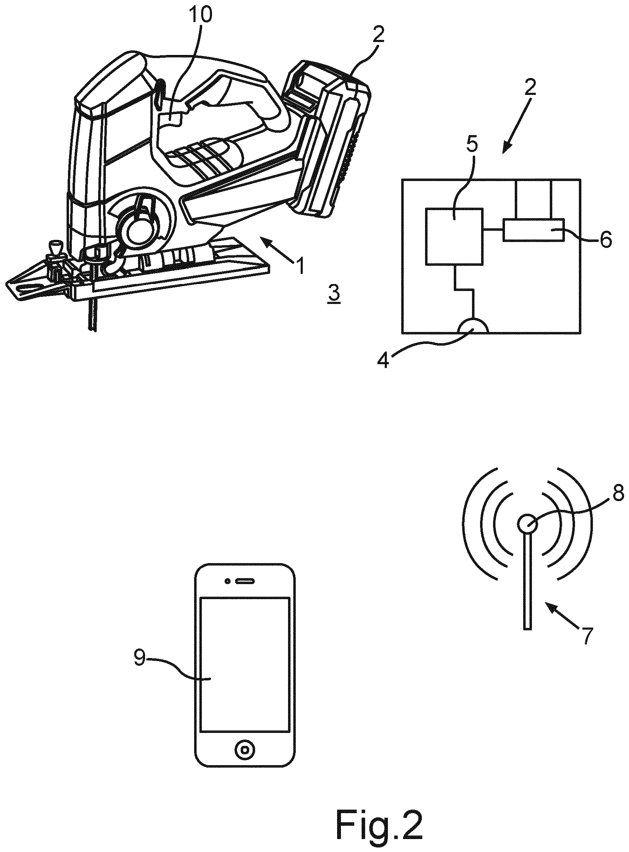

In Fig. 2 ist eine weitere beispielhafte Ausführungsform eines Systems zur Nutzungsbeschränkung nach dem verbesserten Konzept dargestellt. Die Nutzungsbeschränkungsvorrichtung 3 ist dabei basierend auf der Nutzungsbeschränkungsvorrichtung 3 der Fig. 1 ausgeführt.

In der Ausführungsform der Fig. 2 ist das Sendegerät 7 jedoch als stationärer Sender ausgestaltet. Die Kommunikationsschnittstelle 4 kann in solchen Ausführungsformen auch eine weitere Sendeeinheit beinhalten, sodass die Steuereinheit 5 mittels der weiteren Sendeeinheit ein Informationssignal abhängig vom Freischalten oder Sperren des Elektrogeräts 1 erzeugen und an ein weiteres elektronisches Endgerät 9 übermitteln kann.

Wie beschrieben, insbesondere hinsichtlich der Figuren, erlaubt es das verbesserte Konzept, eine automatisierte Nutzungsbeschränkung für Elektrowerkzeuge zu implementieren. Dabei wird insbesondere keine dauerhafte Verbindung zwischen dem Elektrogerät und dem Sendegerät beziehungsweise zwischen dem Akkupack des Elektrogeräts und dem Sendegerät verwendet, sondern eine verbindungslose Kommunikation, insbesondere unidirektionale Kommunikation, von dem Sendegerät an das Elektrogerät. Das Elektrogerät kann dann die Anwesenheit eines vom Sendegerät erzeugten Funksignals verifizieren und dadurch insbesondere feststellen, ob sich das Elektrogerät in einem vorgegebenen Bereich um das Sendegerät herum befindet. Abhängig davon kann das Elektrogerät beziehungsweise der Akku freigeschaltet oder gesperrt werden beziehungsweise bleiben. Dadurch kann insbesondere eine Kindersicherung oder ein Diebstahlschutz implementiert werden.

### BEZUGSZEICHENLISTE:

- 1: Elektrogerät
- 2: Akkupack
- 3: Nutzungsbeschränkungsvorrichtung
- 4: Kommunikationsschnittstelle
- 5: Steuereinheit
- 6: Akkuzellen
- 7: Sendegerät
- 8: Sendeeinheit
- 9: elektronisches Endgerät
- 10: Bedienelement

## Patentansprüche

1. Verfahren zur Nutzungsbeschränkung eines Elektrogeräts (1), wobei
- mittels eines externen Sendegeräts (7) ein Funksignal verbindungslos gesendet wird;
- mittels einer Steuereinheit (5) des Elektrogeräts (1) überprüft wird, ob das Funksignal von dem Elektrogerät (1) empfangen wurde;
- wenn gemäß einem Ergebnis der Überprüfung das Funksignal von dem Elektrogerät (1) empfangen wurde, mittels der Steuereinheit (5) abhängig von dem empfangenen Funksignal eine räumliche Entfernung des Elektrogeräts (1) von dem Sendegerät (7) bestimmt wird; und
- mittels der Steuereinheit (5) abhängig von der Entfernung ein Betrieb des Elektrogeräts (1) freigeschaltet oder gesperrt wird.

2. Verfahren nach Anspruch 1, wobei
- der Betrieb des Elektrogeräts (1) nur dann freigeschaltet wird, wenn gemäß dem Ergebnis der Überprüfung das Funksignal von dem Elektrogerät (1) empfangen wurde; und/oder
- der Betrieb des Elektrogeräts (1) gesperrt wird, wenn gemäß dem Ergebnis der Überprüfung das Funksignal nicht von dem Elektrogerät (1) empfangen wurde.

3. Verfahren nach einem der vorhergehenden Ansprüche, wobei
- das Funksignal mittels des externen Sendegeräts (7) mit einer vorgegebenen Wiederholungsfrequenz wiederholt verbindungslos gesendet wird; und
- zum Überprüfen, ob das Funksignal von dem Elektrogerät (1) empfangen wurde, überprüft wird, ob das Funksignal während eines Zeitraums, der größer oder gleich einer durch die Wiederholungsfrequenz definierten Periodendauer ist, wenigstens einmal von dem Elektrogerät (1) empfangen wurde.

4. Verfahren nach einem der vorhergehenden Ansprüche, wobei
- abhängig von einer Betätigung eines Bedienelements (10) des Elektrogeräts (1) ein Betätigungssignal erzeugt wird; und
- die Überprüfung, ob das Funksignal von dem Elektrogerät (1) empfangen wurde abhängig von dem Betätigungssignal durchgeführt wird oder der Betrieb des Elektrogeräts (1) abhängig von dem Betätigungssignal freigeschaltet oder gesperrt wird.

5. Verfahren nach einem der vorhergehenden Ansprüche, wobei, wenn gemäß dem Ergebnis der Überprüfung das Funksignal von dem Elektrogerät (1) empfangen wurde, mittels der Steuereinheit (5) eine empfangene Feldstärke und/oder eine Amplitude des empfangenen Funksignals bestimmt wird und die Entfernung abhängig von der Feldstärke und/oder der Amplitude bestimmt wird.

6. Verfahren nach einem der vorhergehenden Ansprüche, wobei der Betrieb des Elektrogeräts (1) abhängig von dem Ergebnis der Überprüfung gesperrt wird, indem eine Stromversorgung des Elektrogeräts (1) deaktiviert wird.

7. Verfahren nach einem der vorhergehenden Ansprüche, wobei
- das Funksignal eine Identitätsinformation betreffend das Sendegerät (7) beinhaltet; und
- wenn gemäß dem Ergebnis der Überprüfung das Funksignal von dem Elektrogerät (1) empfangen wurde der Betrieb des Elektrogeräts (1) abhängig von der Identitätsinformation freigeschaltet oder gesperrt wird.

8. Verfahren nach einem der vorhergehenden Ansprüche, wobei das Funksignal als WPAN-Funksignal gesendet wird.

9. Verfahren nach einem der vorhergehenden Ansprüche, wobei wenn gemäß dem Ergebnis der Überprüfung das Funksignal nicht von dem Elektrogerät (1) empfangen wurde
- mittels der Steuereinheit (5) eine Zeitdauer bestimmt wird, die seit einem früheren Empfang des Funksignals durch das Elektrogerät (1) vergangen ist; und
- abhängig von der Zeitdauer ein Informationssignal von dem Elektrogerät (1) gesendet wird.

10. Nutzungsbeschränkungsvorrichtung für ein Elektrogerät (1), aufweisend
- eine Kommunikationsschnittstelle (4), die dazu eingerichtet ist, ein Funksignal von einem externen Sendegerät (7) verbindungslos zu empfangen; und
- eine Steuereinheit (5), die dazu eingerichtet ist,
- zu überprüfen, ob das Funksignal mittels der Kommunikationsschnittstelle (4) empfangen wurde;
- wenn gemäß einem Ergebnis der Überprüfung das Funksignal von dem Elektrogerät (1) empfangen wurde, mittels der Steuereinheit (5) abhängig von dem empfangenen Funksignal eine räumliche Entfernung des Elektrogeräts (1) von dem Sendegerät (7) zu bestimmen; und
- abhängig von der Entfernung ein Freischaltsignal zum Freischalten eines Betriebs des Elektrogeräts (1) oder ein Sperrsignal zum Sperren des Betriebs des Elektrogeräts (1) zu erzeugen.

11. Akkupack für ein Elektrogerät (1), wobei das Akkupack (2) eine Nutzungsbeschränkungsvorrichtung (3) nach Anspruch 10 enthält.

12. Elektrogerät (1), das eine Nutzungsbeschränkungsvorrichtung (3) nach Anspruch 10 oder ein Akkupack (2) nach Anspruch 11 enthält.

13. System zur Nutzungsbeschränkung für ein für ein Elektrogerät (1), das System (1, 2, 3, 7) aufweisend
- ein externes Sendegerät (7), das dazu eingerichtet ist, ein Funksignal verbindungslos zu senden; und
- eine Nutzungsbeschränkungsvorrichtung (3) nach Anspruch 10.

14. System nach Anspruch 13, wobei
- das externe Sendegerät (7) als stationärer Sender ausgestaltet ist; oder
- das externe Sendegerät (7) als mobiles elektronisches Endgerät ausgestaltet ist.

## Claims

1. A method for use restriction of an electric appliance (1), wherein
- a radio signal is wirelessly transmitted by means of an external transmitting device (7);
- it is examined by means of a control unit (5) of the electric appliance (1) if the radio signal has been received by the electric appliance (1);
- if the radio signal has been received by the electric appliance (1) according to a result of the examination, a spatial distance of the electric appliance (1) from the transmitting device (7) is determined by means of the control unit (5) depending on the received radio signal; and
- an operation of the electric appliance (1) is enabled or disabled by means of the control unit (5) depending on the distance.

2. The method according to claim 1, wherein
- the operation of the electric appliance (1) is enabled only if the radio signal has been received by the electric appliance (1) according to the result of the examination; and/or
- the operation of the electric appliance (1) is disabled if the radio signal has not been received by the electric appliance (1) according to the result of the examination.

3. The method according to any one of the preceding claims, wherein
- the radio signal is repeatedly wirelessly transmitted with a preset repetition frequency by means of the external transmitting device (7); and
- for examining if the radio signal has been received by the electric appliance (1), it is examined if the radio signal has been received at least once by the electric appliance (1) during a period of time, which is greater than or equal to a periodic time defined by the repetition frequency.

4. The method according to any one of the preceding claims, wherein
- depending on an actuation of an operating element (10) of the electric appliance (1), an actuation signal is generated; and
- the examination if the radio signal has been received by the electric appliance (1) is performed depending on the actuation signal or the operation of the electric appliance (1) is enabled or disabled depending on the actuation signal.

5. The method according to any one of the preceding claims, wherein, if the radio signal has been received by the electric appliance (1) according to the result of the examination, a received field strength and/or an amplitude of the received radio signal are determined by means of the control unit (5) and the distance is determined depending on the field strength and/or the amplitude.

6. The method according to any one of the preceding claims, wherein the operation of the electric appliance (1) is disabled depending on the result of the examination in that a current supply of the electric appliance (1) is deactivated.

7. The method according to any one of the preceding claims, wherein
- the radio signal includes identity information relating to the transmitting device (7); and
- if the radio signal has been received by the electric appliance (1) according to the result of the examination, the operation of the electric appliance (1) is enabled or disabled depending on the identity information.

8. The method according to any one of the preceding claims, wherein the radio signal is transmitted as a WPAN radio signal.

9. The method according to any one of the preceding claims, wherein, if the radio signal has not been received by the electric appliance (1) according to the result of the examination,
- a period of time, which has elapsed since a former reception of the radio signal by the electric appliance (1), is determined by means of the control unit (5); and
- an information signal is transmitted from the electric appliance (1) depending on the period of time.

10. A use restriction device for an electric appliance (1), comprising
- a communication interface (4), which is configured to wirelessly receive a radio signal from an external transmitting device (7); and
- a control unit (5), which is configured
- to examine if the radio signal has been received by means of the communication interface (4);
- if the radio signal has been received by the electric appliance (1) according to a result of the examination, to determine a spatial distance of the electric appliance (1) from the transmitting device (7) by means of the control unit (5) depending on the received radio signal; and
- to generate an enable signal for enabling an operation of the electric appliance (1) or a disable signal for disabling the operation of the electric appliance (1) depending on the distance.

11. A battery pack for an electric appliance (1), wherein the battery pack (2) includes a use restriction device (3) according to claim 10.

12. An electric appliance (1), which includes a use restriction device (3) according to claim 10 or a battery pack (2) according to claim 11.

13. A system for use restriction for an electric appliance (1), the system (1, 2, 3, 7) comprising
- an external transmitting device (7), which is configured to wirelessly transmit a radio signal; and
- a use restriction device (3) according to claim 10.

14. The system according to claim 13, wherein
- the external transmitting device (7) is configured as a stationary transmitter; or
- the external transmitting device (7) is configured as a mobile electronic terminal.

## Revendications

1. Procédé de restriction d'utilisation d'un appareil électrique (1), dans lequel
- un signal radio est émis sans connexion au moyen d'un appareil émetteur externe (7) ;
- une unité de commande (5) de l'appareil électrique (1) vérifie si le signal radio a été reçu par l'appareil électrique (1) ;
- si, selon un résultat de la vérification, le signal radio a été reçu par l'appareil électrique (1), une distance spatiale entre l'appareil électrique (1) et l'émetteur (7) est déterminée au moyen de l'unité de commande (5) en fonction du signal radio reçu ; et
- un fonctionnement de l'appareil électrique (1) est autorisé ou bloqué au moyen de l'unité de commande (5) en fonction de la distance.

2. Procédé selon la revendication 1, dans lequel
- le fonctionnement de l'appareil électrique (1) n'est autorisé que si, selon le résultat de la vérification, le signal radio a été reçu par l'appareil électrique (1) ; et/ou
- le fonctionnement de l'appareil électrique (1) est bloqué si, selon le résultat de la vérification, le signal radio n'a pas été reçu par l'appareil électrique (1).

3. Procédé selon l'une des revendications précédentes, dans lequel
- le signal radio est émis de manière répétée sans connexion au moyen de l'appareil émetteur externe (7) avec une fréquence de répétition prédéfinie ; et
- pour vérifier si le signal radio a été reçu par l'appareil électrique (1), il est vérifié si le signal radio a été reçu au moins une fois par l'appareil électrique (1) pendant un intervalle de temps supérieur ou égal à une durée définie par la fréquence de répétition.

4. Procédé selon l'une des revendications précédentes, dans lequel
- un signal d'actionnement est généré en fonction d'un actionnement d'un élément de commande (10) de l'appareil électrique (1) ; et
- la vérification du fait que le signal radio a ou non été reçu par l'appareil électrique (1) est effectuée en fonction du signal d'actionnement, ou le fonctionnement de l'appareil électrique (1) est autorisé ou bloqué en fonction du signal d'actionnement.

5. Procédé selon l'une des revendications précédentes, dans lequel, si, selon le résultat de la vérification, le signal radio a été reçu par l'appareil électrique (1), une intensité de champ reçue et/ou une amplitude du signal radio reçu est déterminée au moyen de l'unité de commande (5) et la distance est déterminée en fonction de l'intensité de champ et/ou de l'amplitude.

6. Procédé selon l'une des revendications précédentes, dans lequel le fonctionnement de l'appareil électrique (1) est bloqué en fonction du résultat de la vérification, par désactivation de l'alimentation électrique de l'appareil électrique (1).

7. Procédé selon l'une des revendications précédentes, dans lequel
- le signal radio contient une information d'identité concernant l'émetteur (7) ; et
- si, selon le résultat de la vérification, le signal radio a été reçu par l'appareil électrique (1), le fonctionnement de l'appareil électrique (1) est autorisé ou bloqué en fonction de l'information d'identité.

8. Procédé selon l'une des revendications précédentes, dans lequel le signal radio est émis sous la forme d'un signal radio WPAN.

9. Procédé selon l'une des revendications précédentes, dans lequel, si, selon le résultat de la vérification, le signal radio n'a pas été reçu par l'appareil électrique (1)
- une durée écoulée depuis une réception antérieure du signal radio par l'appareil électrique (1) est déterminée au moyen de l'unité de commande (5) ; et
- un signal d'information est émis par l'appareil électrique (1) en fonction de la durée.

10. Dispositif de restriction d'utilisation d'un appareil électrique (1), comprenant
- une interface de communication (4) conçue pour recevoir un signal radio en provenance d'un appareil émetteur externe (7) sans connexion ; et
- une unité de commande (5) conçue pour
- vérifier si le signal radio a été reçu au moyen de l'interface de communication (4) ;
- si, selon le résultat de la vérification, le signal radio a été reçu par l'appareil électrique (1), déterminer au moyen de l'unité de commande (5) une distance spatiale entre l'appareil électrique (1) et l'émetteur (7) en fonction du signal radio reçu ; et
- en fonction de la distance, générer un signal d'autorisation pour autoriser le fonctionnement de l'appareil électrique (1) ou un signal de blocage pour bloquer le fonctionnement de l'appareil électrique (1).

11. Bloc d'accumulateur pour un appareil électrique (1), le bloc d'accumulateur (2) contenant un dispositif de restriction d'utilisation (3) selon la revendication 10.

12. Appareil électrique (1) contenant un dispositif de restriction d'utilisation (3) selon la revendication 10 ou un bloc d'accumulateur (2) selon la revendication 11.

13. Système de restriction d'utilisation pour un appareil électrique (1), le système (1, 2, 3, 7) comprenant
- un appareil émetteur externe (7) conçu pour émettre un signal radio sans connexion ; et
- un dispositif de restriction d'utilisation (3) selon la revendication 10.

14. Système selon la revendication 13, dans lequel
- l'appareil émetteur externe (7) est conçu sous la forme d'un émetteur stationnaire ; ou
- l'appareil émetteur externe (7) est conçu sous la forme d'un terminal électronique mobile.
